# EUROPEAN PATENT SPECIFICATION

(11) **EP 4 398 055 B1**
(45) Date of publication and mention of the grant of the patent: **05.11.2025**
(21) Application number: 24151034.6
(22) Date of filing: 09.01.2024
(51) Int. Cl.: G05B 17/02

(54) **ENHANCED ENGINE MODEL FOR CONTROL AND HEALTH MONITORING**
VERBESSERTES MOTORMODELL ZUR STEUERUNG UND GESUNDHEITSÜBERWACHUNG
MODÈLE DE MOTEUR AMÉLIORÉ POUR LA COMMANDE ET LA SURVEILLANCE DE L'ÉTAT DE SANTÉ

(30) Priority: 09.01.2023 US 202318151939
(43) Date of publication of application: 10.07.2024
(73) Proprietor: RTX Corporation, Farmington, CT 06032 (US)
(72) Inventor: TANG, Liang, Farmington, 06032 (US); SETO, Danbing, Farmington, 06032 (US)
(74) Representative: Dehns

(56) References cited:
- EP-A1- 3 690 559
- US-A1- 2007 073 525
- US-A1- 2017 146 976
- FENG LU ET AL: "A Model-Based Approach for Gas Turbine Engine Performance Optimal Estimation", ASIAN JOURNAL OF CONTROL, CHINESE AUTOMATIC CONTROL SOCIETY, HOBOKEN, USA, vol. 15, no. 6, 20 June 2013 (2013-06-20), pages 1794 - 1808, XP072341367, ISSN: 1561-8625, DOI: 10.1002/ASJC.737

## Description

### BACKGROUND

Exemplary embodiments of the present invention pertain to the art of gas turbine engines, and more particularly to dynamic modeling for control and health monitoring of gas turbine engines.

Dynamic models are commonly used for control and diagnostics of gas turbine engine such as, for example, aircraft engines. Control functions of the aircraft may use the estimated engine parameters generated by the model to establish a closed-loop control system for controlling operating objectives when the model is implemented onboard the aircraft, while the diagnostic functions may rely on the diagnostic features for Fault Detection and Isolation (FD&I). A variety of models have been utilized in the industry including, but not limited to, dynamic state variable models (e.g., linear models or nonlinear models) coupled with a self-tuning function (e.g., a Kalman filter) to match the engine model to the individual engine that is being controlled and monitored.

EP 3 690 559 A1 discloses machine learned aero-thermodynamic engine inlet condition synthesis.

US 2017/0146976 A1 discloses methods and systems for fault detection and identification in an aircraft.

US 2007/0073525 A1 discloses a method and system for gas turbine engine simulation using an adaptive Kalman filter.

Further prior art includes FENG LU et al: "A Model-Based Approach for Gas Turbine Engine Performance Optimal Estimation", Asian Journal of Control, Chinese Automatic Control Society, Hoboken, USA, vol. 15, no. 6, 20 June 2013, pages 1794-1808, ISSN: 1561-8625, DOI: 10.1002/ASJC.737.

### BRIEF DESCRIPTION

According to an aspect of the present invention, there is provided an engine model calibration system as claimed in claim 1.

In an embodiment according to any of the previous aspects or embodiments, the self-tuned engine estimation module further comprises a self-tuning module and a long-term trending deterioration module. The self-tuning module is configured to determine adjusted tuning parameters (Δη) indicative of aggregated adjustments to the closed-loop self-tuned engine model based a difference between the measured parameters (Pmas) and the estimated self-tuned engine parameters (P*est). The long-term trending deterioration module is configured to determine long-term tuning parameters (ΔηLT) based on the adjusted tuning parameters (Δη) and to determine the short-term tuning parameters (ΔηST) based on a difference between the adjusted tuning parameters (Δη) and the long-term tuning parameters (ΔηLT).

In an embodiment according to any of the previous aspects or embodiments, the self-tuned engine estimation module updates the closed-loop self-tuned engine model using the short-term tuning parameters (ΔηST) independently from the long-term tuning parameters (ΔηLT).

In an embodiment according to any of the previous aspects or embodiments, the regime recognition module selects a given calibration model among a plurality of different calibration models based on the identified one or more engine operating conditions, and delivers the selected calibration model to the calibration adjustment module, and the calibration adjustment module updates the open-loop nominal engine model and the closed-loop self-tuned engine model based on the selected calibration model.

In an embodiment according to any of the previous aspects or embodiments, the plurality of different calibration models include an entry into service model that is constructed based on test cell data generated according to an acceptance test, and a service calibration model that is constructed based on flight data collected during operation of the gas turbine engine.

In an embodiment according to any of the previous aspects or embodiments, the regime recognition module initiates a calibration adjustment mode to calibrate the open-loop nominal engine model and the closed-loop self-tuned engine model in response to determining that the identified one or more engine operating conditions were not previously identified.

In an embodiment according to any of the previous aspects or embodiments, the regime recognition module assigns confidence values to the operating conditions of the gas turbine engine and determines when the identified one or more engine operating conditions were not previously identified based the confidence values and a threshold value.

In an embodiment according to any of the previous aspects or embodiments, in response to initiating the calibration mode, the regime recognition module increases the confidence value of the identified operating conditions.

According to another aspect of the present invention, there is provided a method of calibrating an engine model representing a gas turbine engine as claimed in claim 9.

In an embodiment according to any of the previous aspects or embodiments, the method further includes determining, via a self-tuning module, adjusted tuning parameters (Δη) indicative of aggregated adjustments to the closed-loop self-tuned engine model based on a difference between the measured parameters (Pmas) and the estimated self-tuned engine parameters (P*est), determining, via a long-term trending deterioration module, the long-term tuning parameters (ΔηLT) based on the adjusted tuning parameters (Δη), and determining the short-term tuning parameters (ΔηST) based on a difference between the adjusted tuning parameters (Δη) and the long-term tuning parameters (ΔηLT).

In an embodiment according to any of the previous aspects or embodiments, the self-tuned engine estimation module updates the closed-loop self-tuned engine model using the short-term tuning parameters (ΔηST) independently from the long-term tuning parameters (ΔηLT).

In an embodiment according to any of the previous aspects or embodiments, the method further includes selecting, via the regime recognition module, a given calibration model among a plurality of different calibration models based on the identified one or more engine operating conditions, delivering the selected calibration model to a calibration adjustment module, and updating, via the calibration adjustment module, the open-loop nominal engine model and the closed-loop self-tuned engine model based on the selected calibration model.

**In** an embodiment according to any of the previous aspects or embodiments, the plurality of different calibration models includes an entry into service model that is constructed based on test cell data generated according to an acceptance test, and a service calibration model that is constructed based on flight data collected during operation of the gas turbine engine.

In an embodiment according to any of the previous aspects or embodiments, the method further includes initiating, via the regime recognition module, a calibration adjustment mode to calibrate the open-loop nominal engine model and the closed-loop self-tuned engine model in response to determining that the identified one or more engine operating conditions were not previously identified.

In an embodiment according to any of the previous aspects or embodiments, the method further includes assigning, via the regime recognition module, confidence values to the operating conditions of the gas turbine engine, and determining, via the regime recognition module, when the identified one or more engine operating conditions were not previously identified based the confidence values and a threshold value.

In an embodiment according to any of the previous aspects or embodiments, in response to initiating the calibration mode, the regime recognition module increases the confidence value of the identified operating conditions.

The above described and other features are exemplified by the following figures and detailed description.

### BRIEF DESCRIPTION OF THE DRAWINGS

FIG. 1 is a partial cross-sectional view of a gas turbine engine;
FIG. 2 is a diagram depicting an engine model calibration system; and
FIG. 3A is a diagram depicting a memory map at engine entry into service (EIS);
FIG. 3B is a diagram depicting the memory map following a first number of aircraft flights;
FIG. 3C is a diagram depicting the memory map following a second number of aircraft flights;
FIG. 4A is a signal diagram depicting a delta tuner function including long-term engine deterioration parameters (ΔηLT) and capped by parameter limits;
FIG. 4B is a signal diagram depicting a delta tuner function that removes the long-term engine deterioration parameters (ΔηLT) according to a non-limiting embodiment;
FIG. 5 depicts an example of a signal diagram used by the fault detection module to detect the presence of a fault according to a non-limiting embodiment; and
FIG. 6 is a flow diagram illustrating a method of using and training a service calibration model is illustrated according to a non-limiting embodiment.

### DETAILED DESCRIPTION

Self-tuning models such as an aircraft on-board engine models (OBEM) utilize tuning parameters, sometimes referred to simply as "tuners", which are adjustments to various engine's physical parameters including, for example, component efficiencies and flow capacities. When used for diagnostic purpose, however, these self-tuning models often suffer from "tuner contamination," which refers to a problem that occurs when the self-tuning models attempt compensate for various uncertainties such as engine to engine variation, measurement error, and model infidelity to name a few. Consequently, the tuners essentially lose their physical meanings or physical "truths," which reduces their value and reliability when performing engine health assessment. One way to preserve the physical meaning of the tuners is to calibrate the model before use so that it absorbs as maximum number of uncertainties as possible. This is usually achieved by using the actual field data in the context of a "Digital Twin" concept and leveraging Machine Learning techniques. However, conventional dynamic model calibration techniques suffer from two significant challenges.

First, the data-driven model calibration requires a large amount of field data for model training to cover the normal operation of the engine which prevents the model from being used at engine entry into service (EIS). Even if a portion of early engine service is dedicated for model calibration, there is no guarantee that all the engine operating conditions are learned, especially for military engines.

Second, even if the model is well-calibrated, and the tuners track the engine physical parameters accurately, the self-tuning capability will diminish proportionally to the engine deterioration. In actual implementation, the tuners are often range limited to prevent undesirable adjustments being applied, which in turn reduces the tuning capabilities, particularly when the engine deterioration gets larger.

One or more embodiments described herein overcome the shortcomings found in conventional dynamic model calibration techniques by providing a self-calibrating dynamic model that can be used upon engine EIS and calibrated only when needed. As the engine deteriorates, the long-term deterioration (LTD) is separated from the self-tuning function so that the adjustments of the model remain within the predefined limits. In this manner, the self-tuning capability of the dynamic engine model will be unaffected by the engine deterioration.

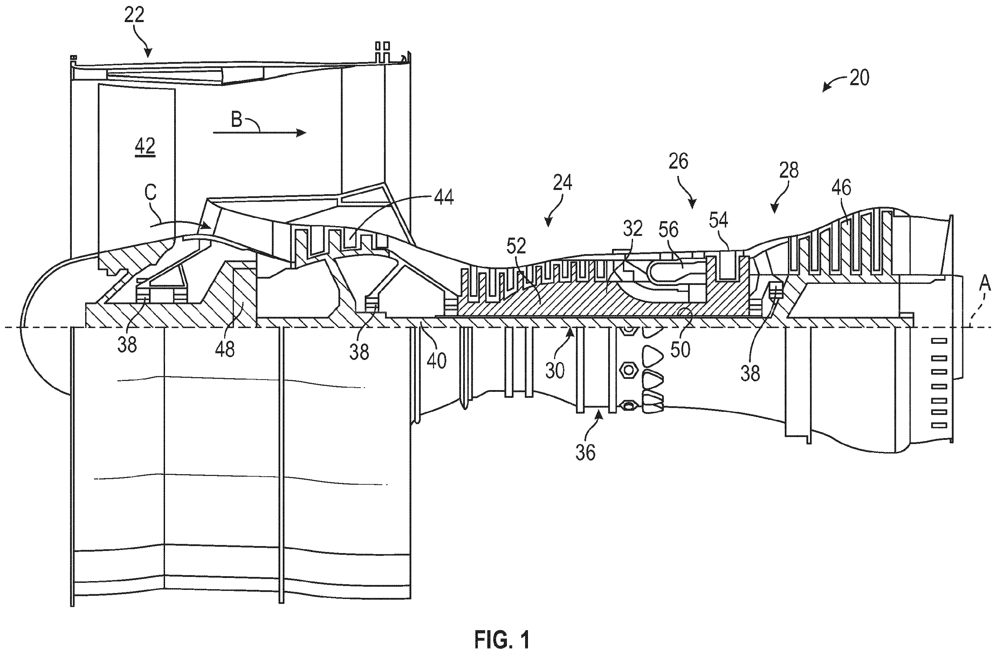

With reference now to FIG. 1 a gas turbine engine 20 is schematically illustrate according to a non-limiting embodiment. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flowpath B in a bypass duct, while the compressor section 24 drives air along a core flowpath C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption, also known as "bucket cruise Thrust Specific Fuel Consumption (TSFC)", is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

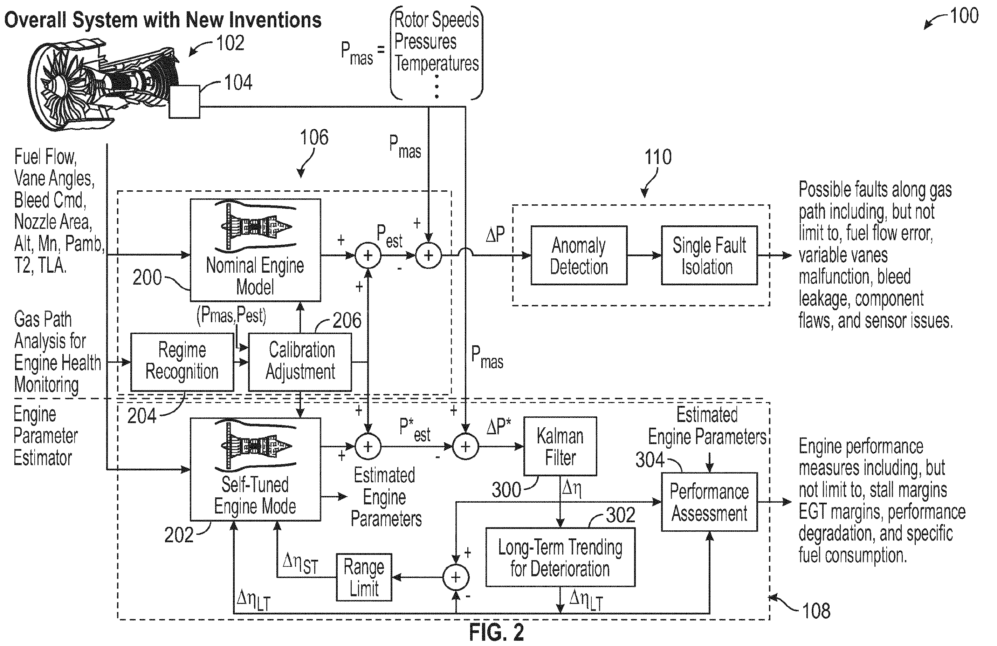

Referring now to FIG. 2, an enhanced engine model system 100 is illustrated according to a non-limiting embodiment. The enhanced engine model system 100 includes a gas turbine engine 102, one or more sensor 104, a nominal engine estimation module 106, a self-tuned engine estimation module 108, and a fault detection and isolation module 110. The gas turbine engine 102 is configured to operate according to one or more engine parameters, the engine parameters including, but not limited to, fuel flow, vane angles, bleed air flow rate, nozzle area, altitude, ambient air pressure, ambient temperature, and throttle lever angle (TLA). The sensors 104 (e.g., a gas path sensor, speed sensors, pressure sensors, temperature sensors, etc.) are configured to monitor operation of the gas turbine engine in real-time and output (e.g., in real-time). Accordingly, one or more of the sensors can output a measured engine parameter signal indicating measured engine parameters (Pₘₐₛ) of the one or more engine parameters, the measured engine parameters (Pₘₐₛ) including, but not limited to, engine rotor speeds, engine pressures, and engine temperatures.

The nominal engine estimation module 106 utilizes one or more on-board engine models (OBEMs) to generate estimated engine parameters representing the measured engine parameters (Pₘₐₛ). The OBEMs include one or more open-loop nominal engine models 200 and the calibration adjustment module 206 working in conjunction with the regime recognition module 204 which are described in greater detail below. The open loop engine model 200 represents a manifestation of what is considered nominal and is used as a reference for measuring engine deviation from it due to failure or deterioration. The open-loop nominal engine model 200 is configured to receive the engine parameters and a set of calibration adjustments to generate estimated engine parameters that can be further adjusted by another set of calibration adjustments to generate nominal estimated engine parameters (Pₑₛₜ) representing the measured engine parameters (Pₘₐₛ). The nominal estimated engine parameters (Pₑₛₜ) can be used as a reference for measuring engine deviation from it, namely, the difference between (Pₘₐₛ) and (Pₑₛₜ), due to failure or deterioration.

The self-tuning engine estimation module 108 utilizes one or more on-board engine models (OBEMs) 202 to generate estimated engine parameters representing the measured engine parameters (Pₘₐₛ) and implements a performance assessment module 304 to track performance related engine health. The OBEMs include a self-tuned engine model 202 (a.k.a. the closed-loop model), which is closed loop on the adjustments produced by a self-tuning module 300 and a long-term deterioration module 302. In addition to the tuning adjustments, the self-tuned closed-loop engine model 202 is configured to receive the engine parameters and a set of calibration adjustments to generate estimated engine parameters that can be further adjusted by another set of calibration adjustment to generate estimated engine parameters (P*ₑₛₜ) representing the measured engine parameters (Pₘₐₛ).

The self-tuned closed-loop model 202 incorporates the tuning adjustments to parameters in major modules of the engine, e.g., the efficiencies and flow capacities of the compressors and turbines. Instead of being aggregated, the adjustments are divided into two parts to account for engine short-term tuning and long-term deterioration separately. In this manner, the self-tuning capability of the OBEM 202 will be unaffected by the long-term engine deterioration that occurs over time.

The combination of the self-tuning module 300 and the long-term trending deterioration module 302 is configured to identify the engine long-term deterioration and separate it from the self-tuning capability. In this manner, the OBEMs can be tuned without influence from the long-term engine deterioration.

The self-tuning module 300 translates the residuals, namely the difference between (Pₘₐₛ) and (P*ₑₛₜ), to tuning parameters (Δη) which are in turn processed in the long-term deterioration module 302 for extraction of the long-term deterioration (ΔηLT). The long-term trending deterioration module 302 determines the long-term deterioration tuning parameters (ΔηLT) and outputs them along a first signal path to the Performance Assessment module 304 to track the engine health based on performance; a second signal path directly to the self-tuned engine model 202 to provide a separate tunning; and a third signal path for Δη_{LT} to be removed from the aggregated tuning parameters (Δη) to separate the long-term and short-term tuning. The difference, Δη - Δη_{LT}, is range-limited to prevent unexpected adjustments to the engine model 202, and the results become the short-term tuning parameter (Δη_{ST}), also fed to the model 202. In this manner, the self-tuned engine estimation module 108 can update the closed-loop self-tuned engine model 202 using the short-term tuning parameters (Δη_{sT}) independently from the long-term tuning parameters (ΔηLT). For example, the self-tuned engine model 202 is configured to receive both the short-term tuning parameters (Δηs_{T}) and the long-term deterioration (Δη_{LT}), where the long-term deterioration is incorporated into the base model to result in a model for deteriorated engine while the short-term tuning parameters (Δηs_{T}) are used to tune the self-tuned engine model 202 so that it matches the engine 102 being monitored and controlled. The self-tuning module 300 can be implemented as a Kalman Filter, for example, and is configured to determine - tuning parameters (Δη) indicative of the aggregated adjustments to the self-tuned engine model 202 for alignment with the engine 102 based on a difference (AP*) between the measured engine parameters (Pₘₐₛ) and tuned estimated engine parameters (P*ₑₛₜ).

According to one or more embodiments, the long-term deterioration module 302 extracts long-term deterioration from (Δη) and compares the identified long-term deterioration against a predefined engine deterioration model implemented in the long-term deterioration module 302 to confirm its validity. The short-term tuning parameters (Δη_{ST}) is determined by removing the confirmed long-term deterioration parameters (Δη_{LT}) from the aggregated tuning parameters Δη and range-limiting the result. In this manner, the long-term deterioration parameter (ΔηLT) can be excluded from the self-tuning capability so that the short-term tuning parameters (Δη_{ST}) are not saturated by the range limits, and therefore avoid a diminished self-tuning capability found in conventional systems.

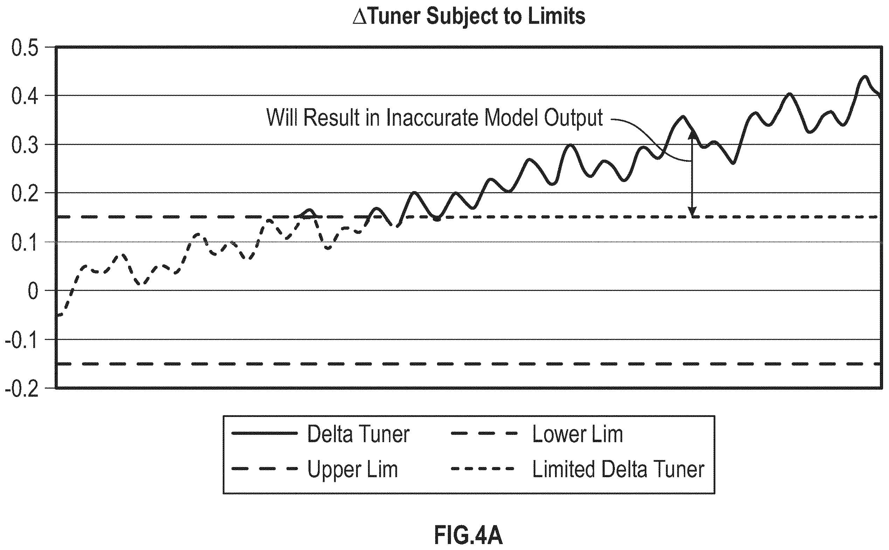

FIG. 4A, for example, is a signal diagram depicting a delta tuner function including long-term engine deterioration parameters (ΔηLT) and capped by parameter limits. To account for engine deterioration over time, delta tuners of conventional Kalman Filters are designed to accommodate the increasing difference between the engine and the model due to all sorts of uncertainties. However, the delta tuners will likely grow out of the limits imposed to prevent the model from getting to some undesired state. When the delta tuners are capped at the limits, the tuning capability will be diminished and the accuracy of the model output (e.g., estimated engine parameters) will be reduced, as shown in FIG. 4A.

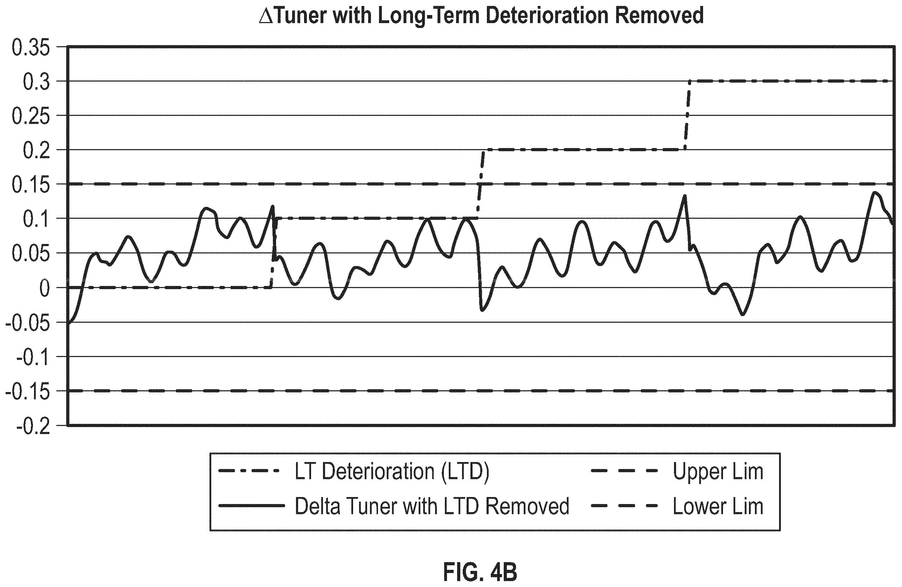

As illustrated in FIG. 4B, however, removing or canceling the long-term deterioration (LTD) from the delta tuner of the Kalman Filter 300 as described according one or more non-limiting embodiments of the present disclosure will keep the latter remain within the limits while the self-tuning capability of the Kalman Filter 300 is fully retained. In this manner, the long-term deterioration is updated periodically as the engine 102 deteriorates over time while the short-term tuning parameters (Δη_{ST}) are varying continuously in real-time.

According to one or more embodiments, the long-term deterioration and the delta tuner with the LTD removed by separation are essentially added back to tune the closed-loop self-tuning engine model 202. The outcome appears as an unlimited delta tuner being used to adjust the closed-loop self-tuning engine model 202. However, the benefit of separating the LTD from the delta tuner is to allow an additional assessment of LTD being incorporated other than a simple detrend. In one or more embodiments, the function of the long-term deterioration trend can be examined with respect to the trend in delta tuner and assess the trend with the prior knowledge of deteriorated engines in the family. The result of this function is the identified long-term engine deterioration for the time period of interest.

Returning to FIG. 2, the performance assessment module 304 is configured to determine a performance change of the gas turbine engine based on the adjusted tuning parameters (Δη) and the long-term deterioration parameters (Δη_{LT}), and assesses a current performance of the engine 102. The assessed performance can include, but is not limited to, low/high compressor stall margins, Exhaust Gas Temperature (EGT) margins, performance degradation, and Specific Fuel Consumption (SFC).

As described herein, both the nominal engine model 200 and the self-tuned engine model 202 are calibrated for better alignment with the engine under monitoring and control. According to a non-limiting embodiment, the calibration of both the nominal engine model 200 and the self-tuned engine model 202 is regime-based and completely independent of the self-tuning function. According to a non-limiting embodiment, the different calibration could be applied to the nominal engine model 200 and the self-tuned engine model 202.

The regime recognition module 204 is configured to determine operating conditions at which the engine 102 is operating. The operating conditions include, for example, the determination of flight phase (e.g., ground idle, taxi-out, takeoff, climb, cruise, descent, approach, landing for a commercial airplane) and operational states (e.g., steady state, quasi-steady state, transient). Based on the current operating conditions, the regime recognition module 204 selects a given calibration model for calibrating the open-loop nominal engine model 200 and the closed-loop self-tuning engine model 202. According to a non-limiting embodiment, the regime recognition module 204 can selected two types of calibration models: an entry into service (EIS) Calibration Model (sometimes referred to as an "Acceptance Calibration Model"); and a Service Calibration Model.

The EIS Calibration Model is constructed based on test cell data from an acceptance test. Module performance is analyzed and converted to residuals compensation using engine performance influence coefficients. Engine installation effects are approximated and accommodated in this model. EIS Calibration Model provides fundamental Engine Model calibration and allows critical FD&I functions at EIS. The FD&I function is restricted to perform in prescribed operating regimes and is limited to detecting flight critical failures with minimal false alerts.

The Service Calibration Model is constructed based on flight data collected in service. According to a non-limiting embodiment, the regime recognition module can initiate a training mode, which allows collection of training data, for example, Pₘₐₛ and Pₑₛₜ, and can terminate the training mode when a training condition is met such as, for example, data coverage criteria are met, or a time window expires. According to a non-limiting embodiment, the Service Calibration Models can be trained and managed based on dynamically selected engine operation regimes described in greater detail below.

According to an embodiment, the regime recognition module 204 performs a progressive learning process that allows the service calibration model to be gradually calibrated so that the performance of the service calibration model can be increasingly improved. For example, every engine will start at EIS with a corresponding model calibrated within a set of prescribed actionable regimes that is previously learned, e.g., during an Acceptance Test Program (ATP). While in service (e.g., during operation of the gas turbine engine 102), regime recognition module 204 will initiate a calibration adjustment mode only when the engine 102 is operating at operating conditions that have not occurred in the past or not previously observed by the regime recognition module 204. Any new model calibrations will then expand the scope of actionable regime associated with the selected calibration model, which allows more data points to be processed by the calibrated models for improved performance. In the case of an engine model that is undergoing calibration, the model-supported FD&I capability, engine parameter estimation, and performance trending will be carried out with the less calibrated model, but they will all be improved over time as the calibration model is calibrated with an ever-growing actionable regime.

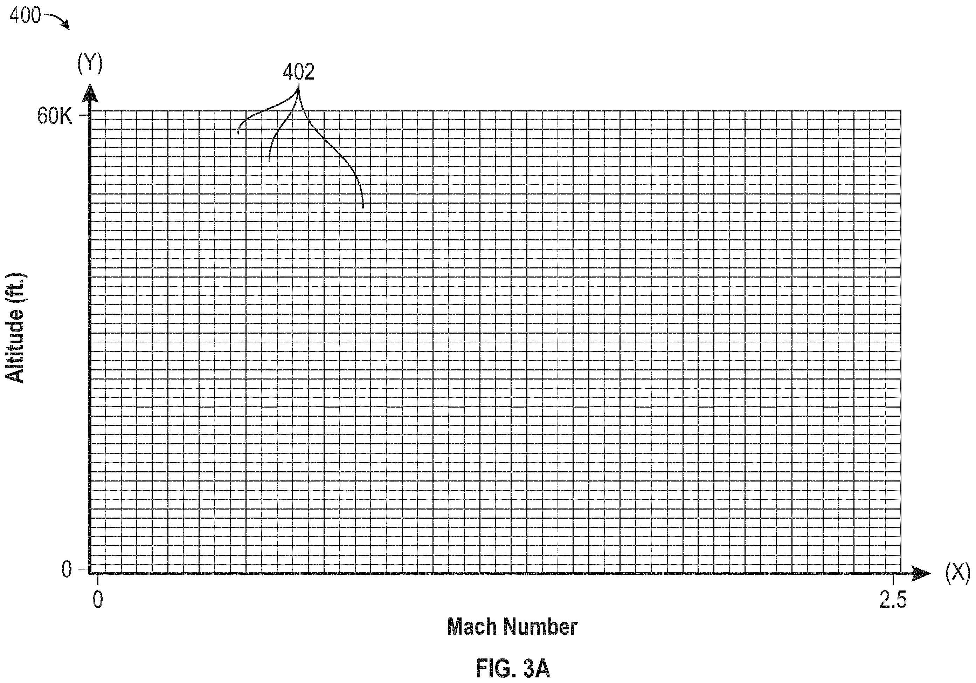

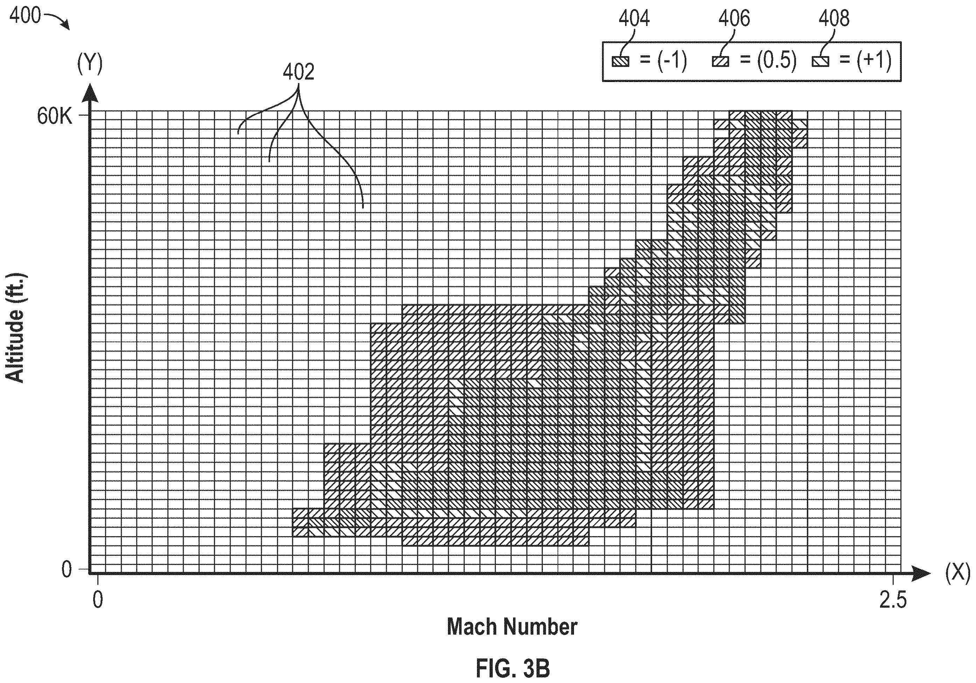

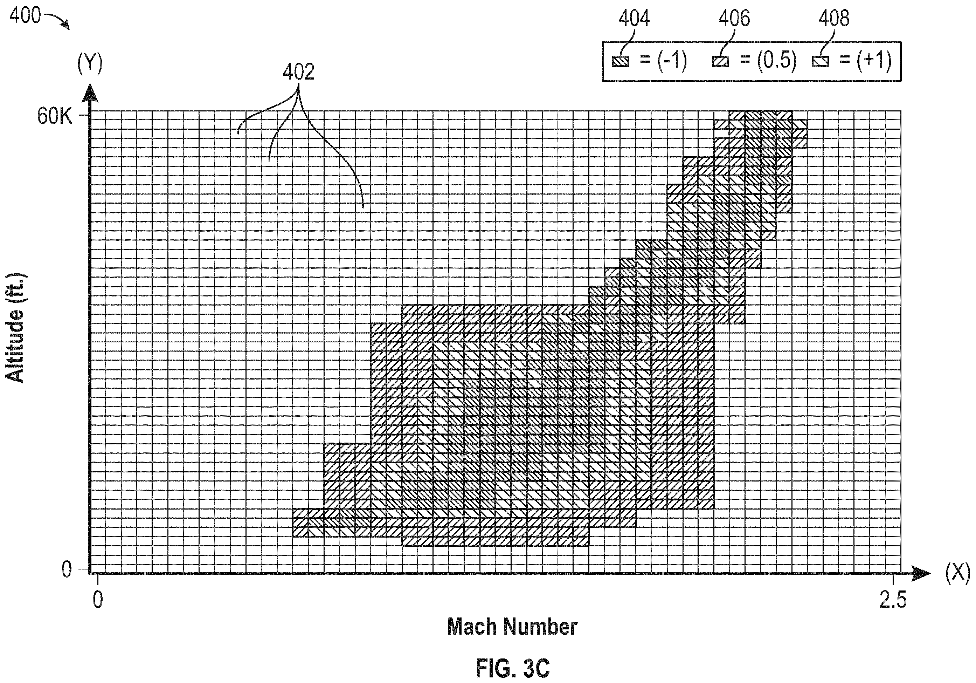

According to an embodiment, the regime recognition module 204 is configured to perform a memory recall function to determine whether or not an operating condition has occurred in the past or has been previously observed. Referring to FIGS. 3A, 3B and 3C (collectively referred to as FIGS. 3A-3C), a memory map 400 utilized by the regime recognition module to perform the memory recall function is illustrated according to a non-limiting embodiment. The memory map 400 includes a plurality of cells 402 representing an individual engine operating condition. According to the example shown in FIGS. 3A-3C, each engine operating condition represented by a given cell 402 is defined by an altitude (defined along the Y-axis) at which the engine is operating with respect to a Mach value (defined along the X-axis) at which the engine is operating. It should be appreciated, however, that the X-axis and Y-axis of the memory map 400 can be assigned different variables.

FIG. 3A illustrates the memory map 400 at entry into service (EIS). At this stage, the aircraft has not performed any flights. Therefore, the cells 402 of the memory map 400 are not filled. However, the memory map 400 "grows" as more data is collected during subsequently flights.

Referring to FIG. 3B, the memory map 400 is illustrated after a first number of flights (e.g., 10 flights). As the aircraft performs subsequent flights, the regime recognition module 204 identifies an engine input parameter set or operating condition among the identified current operating conditions of the aircraft and returns a confidence value indicating the likelihood that this data point has been observed by the regime recognition module 204 during a previous flight. For example, when the confidence value is below a threshold value and/or is a negative value, the regime recognition module 204 can identify or "flag" the engine input parameter set or operating condition(s) as not being previously identified. On the other hand, when the confidence value is above a threshold value and/or is a positive value, the regime recognition module 204 can identify or "flag" the engine input parameter set or operating condition(s) as now being identified or having occurred during operation of the gas turbine engine 102.

According to an embodiment, the confidence value can range between **-1** and 1, for example, where a higher value indicates a higher confidence that the given engine operating condition has been experienced or previously observed. **In** this example, first cells 404 designated with a first shading or first color (e.g., yellow), second cells 406 are designated with a second shading or second color (e.g., blue), and third cells 408 are designated with a third shading or third color (e.g., green). The first cells 404 are associated with a negative value (e.g., **-1)** indicating that the corresponding operating condition has likely not been previously observed. The second cells 406 are associated with a second positive value (e.g., 0.5) indicating that the corresponding operating condition has likely been previously observed. The third cells 408 are associated with a third positive value (e.g., 1) confirming that the corresponding operating condition has been previously observed. According to a non-limiting embodiment, the third positive value can meet or exceed a threshold value, thereby indicating that its associated operating condition or input parameter set has occurred and has been identified.

Referring to FIG. 3C, the memory map 400 is illustrated after the aircraft performs an additional number of flights (e.g., 20 flights). As shown in FIG. 3C, one or more cells 404 corresponding to an operating condition that was previously designated as likely not have been previously observed have now been identified. Accordingly, their corresponding confidence values have been increased and are now designated as likely to have been previously observed (e.g., cells 406) or confirmed to have been previously observed (e.g., cells 408). Similarly, one or more cells 406 corresponding to an operating condition that was previously designated as likely to have been previously observed have now been identified. Accordingly, their corresponding confidence values have been increased and are now designated confirmed to have been previously observed (e.g., cells 408). **In** this manner, the calibrated model is improved over time as it is calibrated with an ever-growing actionable regime.

According to an embodiment, the memory recall function can be implemented as a neural network trained based on the frequency of clustered input data. The input parameters of the neural network can be assigned to the cells 402 to form a high dimensional grid defining the memory map 400. Accordingly, the frequency of data points hitting each cell 402 is normalized to form the confidence target. For repeatable missions or flights such as regular commercial flights, the neural network can train the recognition module 204 using the memory map 400 so that the recognition module 204 learns and remembers previously observed operating conditions sufficiently within a small number of flights, e.g., tens of flights. For less repeatable missions, such as those performed by military aircrafts, for example, the memory map 400 may appear sparser with only concentrated "memories" on common operational phases such as ground idle, takeoff and hover (for rotorcrafts).

Returning to FIG. 2, the fault detection and isolation module 110 uses the residual ΔP for fault detection and isolation. According to a non-limiting embodiment, the fault detection and isolation module 110 operates to detect and isolate an engine fault based at least in part on the parameter difference (ΔP) between the measured engine parameters (Pₘₐₛ) and the estimated nominal engine parameters (Pₑₛₜ). When a fault is detected, the fault detection and isolation module 110 can further operate to identify the particular type of the detected fault. The type of fault detected by the fault detection and isolation module 110 includes, but not limited to, faulty fuel flow, a LPC/HPC variable vane fault, a bleed air leakage, and sensor faults.

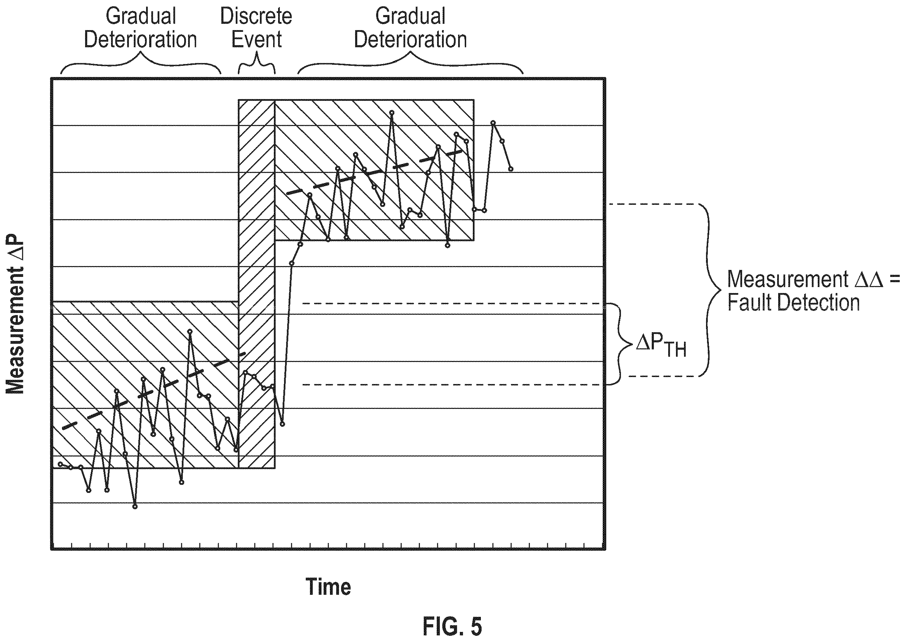

Turning to FIG. 5, an example of a signal diagram used by the fault detection and isolation module 110 to detect the presence of a fault is illustrated according to a non-limiting embodiment. The fault detection and isolation module 110 inputs a signal indicative of the engine parameter difference (ΔP) and continuously monitors it over a period of time. While the fault detection and isolation module 110 monitors the engine parameter difference (ΔP), a discrete event may occur during which parameter difference (ΔP) abruptly increases. When the increased parameter difference (ΔP) exceeds a differential threshold (ΔP_{TH}), the fault detection and isolation module 110 determines the presence of a fault and will move to isolate origin of the fault and/or identify the type of fault.

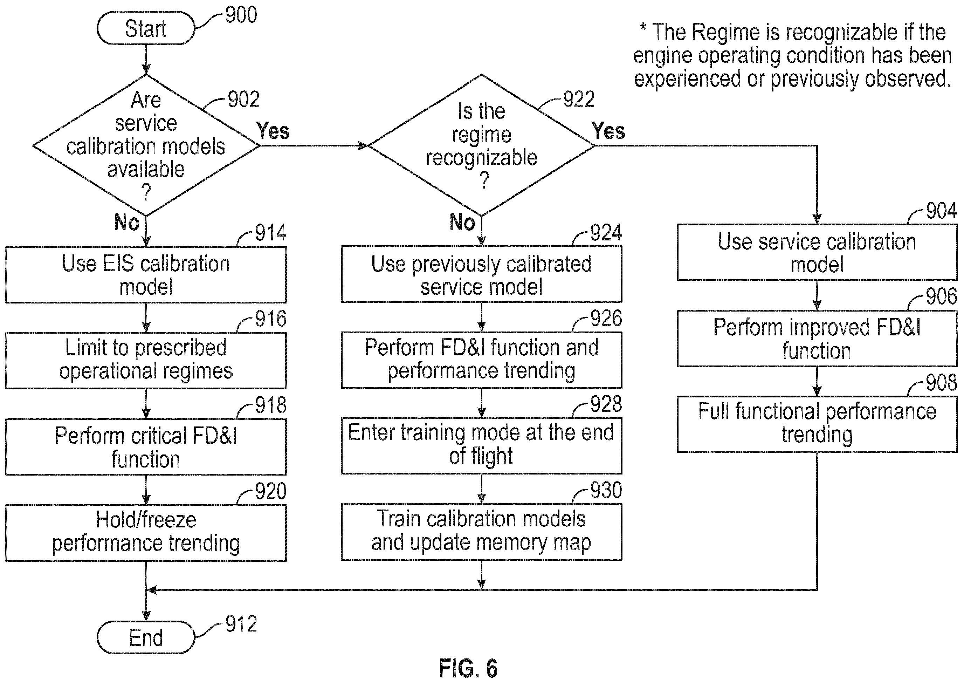

With reference now to FIG. 6, a method of using and training a service calibration model is illustrated according to a non-limiting embodiment. The method begins at operation 900 and at operation 902 determination is performed as to whether any calibrated service models is available. When one or more calibrated service models are available, the method proceeds to operation 922 to determine if the regime is recognizable, namely, if the engine operating condition has been experienced or previously observed. If the regime is recognized, the method proceeds to 904 to call the available calibrated service models for use. At operation 906, the Fault Detection and Isolation (FD&I) function is applied to the selected service calibration model. At operation 908, the full functional performance monitoring is conducted with the selected service calibration model, and the method ends at operation 912.

When, however, one or more calibrated service models are not available at operation 902, the method proceeds to operation 914 and limits the selected EIS calibration model to prescribed operational regimes. At operation 918, a Fault Detection and Isolation (FD&I) function is applied to the selected EIS calibration model. At operation 920, the performance trending of the selected EIS calibration model placed on hold or "paused" and the method ends at operation 912.

In addition, when one or more calibrated service models are available at operation 902, but the regime is not recognizable at operation 922, the method proceeds to operation 924 to call for use of previously calibrated service model and perform FD&I as well as performance trending at operation 926. In this case, one or more service calibration models require training, and the training mode is initiated at operation 928 upon completion of the flight. The service models are trained, and the memory map corresponding to the service calibration model is updated at operation 930. The method ends at operation 912.

As described herein one or more embodiments of the disclosure provide a self-calibrating dynamic model that can be used upon engine EIS and calibrated only when needed. The self-calibrating dynamic model can perform calibration of a nominal and self-tuning engine models as they are used for FD&I and performance assessment. The self-calibrating dynamic model also can separate the long-term tuning parameters and the short-term tuning parameters from one another so that the self-tuning capability is not compromised or diminished as the engine deteriorates.

## Claims

1. An engine model calibration system (100) comprising:
a gas turbine engine (102) configured to operate according to one or more engine operating parameters;
a sensor (104) configured to monitor the gas turbine engine (102) and output measured parameters (Pₘₐₛ) indicative of the one or more engine operating parameters;
a nominal engine estimation module (106) including an open-loop nominal engine model (200) configured to output estimated nominal engine parameters (Pₑₛₜ) indicative of the one or more engine operating parameters, wherein the nominal engine estimation module (106) identifies one or more engine operating conditions of the gas turbine engine (102) based on the one or more engine operating parameters and selectively updates the open-loop nominal engine model (200) based on the identified one or more engine operating conditions; and
a self-tuned engine estimation module (108) including a closed-loop self-tuned engine model (202) configured to output estimated self-tuned engine parameters (P*ₑₛₜ) indicative of the one or more engine operating parameters, wherein the self-tuned engine estimation module (108) updates the closed-loop self-tuned engine model (202) based on short-term tuning parameters (Δη_{ST}) and long-term tuning parameters (Δη_{LT}), wherein the nominal engine estimation module (106) further comprises:
a regime recognition module (204) that identifies the engine operating conditions; and
a calibration adjustment module (206) configured to selectively update the open-loop nominal engine model (200) and the closed-loop self-tuned engine model (202) based on the one or more engine operating conditions identified by the regime recognition module (204).

2. The engine model calibration system (100) of claim 1, wherein the self-tuned engine estimation module (108) further comprises:
a self-tuning module (300) configured to determine adjusted tuning parameters (Δη) indicative of aggregated adjustments to the closed-loop self-tuned engine model (202) based a difference between the measured parameters (Pₘₐₛ) and the estimated self-tuned engine parameters (P*ₑₛₜ); and
a long-term trending deterioration module (302) configured to determine the long-term tuning parameters (ΔηLT) based on the adjusted tuning parameters (Δη) and to determine the short-term tuning parameters (Δη_{ST}) based on a difference between the adjusted tuning parameters (Δη) and the long-term tuning parameters (ΔηLT).

3. The engine model calibration system (100) of claim 1 or 2, wherein the self-tuned engine estimation module (108) updates the closed-loop self-tuned engine model (202) using the short-term tuning parameters (Δη_{ST}) independently from the long-term tuning parameters (ΔηLT).

4. The engine model calibration system (100) of any preceding claim, wherein the regime recognition module (204) selects a given calibration model among a plurality of different calibration models based on the identified one or more engine operating conditions, and delivers the selected calibration model to the calibration adjustment module (206), and the calibration adjustment module (206) updates the open-loop nominal engine model (200) and the closed-loop self-tuned engine model (202) based on the selected calibration model.

5. The engine model calibration system (100) of claim 4, wherein the plurality of different calibration models include an entry into service model that is constructed based on test cell data generated according to an acceptance test, and a service calibration model that is constructed based on flight data collected during operation of the gas turbine engine (102).

6. The engine model calibration system (100) of claim 4 or 5, wherein the regime recognition module (204) initiates a calibration adjustment mode to calibrate the open-loop nominal engine model (200) and the closed-loop self-tuned engine model (202) in response to determining that the identified one or more engine operating conditions were not previously identified.

7. The engine model calibration system (100) of claim 6, wherein the regime recognition module (204) assigns confidence values to the operating conditions of the gas turbine engine (102) and determines when the identified one or more engine operating conditions were not previously identified based the confidence values and a threshold value.

8. The engine model calibration system (100) of claim 7, wherein in response to initiating the calibration mode, the regime recognition module (204) increases the confidence value of the identified operating conditions.

9. A method of calibrating an engine model representing a gas turbine engine (102) configured to operate according to one or more engine operating parameters, the method comprising:
monitoring, via a sensor (104), the gas turbine engine (102) and outputting from the sensor (104) measured parameters (Pₘₐₛ) indicative of the one or more engine operating parameters;
outputting, via a nominal engine estimation module (106) including an open-loop nominal engine model (200), estimated nominal engine parameters (Pₑₛₜ) indicative of the one or more engine operating parameters;
identifying, via the nominal engine estimation module (106), one or more engine operating conditions of the gas turbine engine (102) based on the one or more engine operating parameters;
selectively updating the open-loop nominal engine model (200) based on the identified one or more engine operating conditions;
outputting, via a self-tuned engine estimation module (108) including a closed-loop self-tuned engine model (202), estimated self-tuned engine parameters (P*est) indicative of the one or more engine operating parameters;
updating the closed-loop self-tuned engine model (202) based on short-term tuning parameters (Δη_{ST}) and long-term tuning parameters (Δη_{LT});
identifying, via a regime recognition module (204), the engine operating conditions; and
selectively updating the open-loop nominal engine model (200) and the closed-loop self-tuned engine model (202) using a calibration adjustment module (206) based on the one or more engine operating conditions identified by the regime recognition module (204).

10. The method of claim 9, further comprising:
determining, via a self-tuning module (300), adjusted tuning parameters (Δη) indicative of aggregated adjustments to the closed-loop self-tuned engine model (202) based on a difference between the measured parameters (Pₘₐₛ) and the estimated self-tuned engine parameters (P*ₑₛₜ);
determining, via a long-term trending deterioration module (302), the long-term tuning parameters (ΔηLT) based on the adjusted tuning parameters (Δη); and
determining the short-term tuning parameters (Δη_{ST}) based on a difference between the adjusted tuning parameters (Δη) and the long-term tuning parameters (ΔηLT).

11. The method of claim 9 or 10, wherein the self-tuned engine estimation module (108) updates the closed-loop self-tuned engine model (202) using the short-term tuning parameters (Δη_{ST}) independently from the long-term tuning parameters (Δη_{LT}).

12. The method of any of claims 9 to 11, further comprising:
selecting, via the regime recognition module (204), a given calibration model among a plurality of different calibration models based on the identified one or more engine operating conditions;
delivering the selected calibration model to the calibration adjustment module (206); and
updating, via the calibration adjustment module (206), the open-loop nominal engine model (200) and the closed-loop self-tuned engine model (202) based on the selected calibration model.

13. The method of claim 12, wherein the plurality of different calibration models includes an entry into service model that is constructed based on test cell data generated according to an acceptance test, and a service calibration model that is constructed based on flight data collected during operation of the gas turbine engine (102).

14. The method of claim 12 or 13, further comprising initiating, via the regime recognition module (204), a calibration adjustment mode to calibrate the open-loop nominal engine model (200) and the closed-loop self-tuned engine model (202) in response to determining that the identified one or more engine operating conditions were not previously identified,

15. The method of claim 14, wherein the method further comprises:
assigning, via the regime recognition module (204), confidence values to the operating conditions of the gas turbine engine (102); and
determining, via the regime recognition module (204), when the identified one or more engine operating conditions were not previously identified based the confidence values and a threshold value, optionally wherein:
in response to initiating the calibration mode, the regime recognition module (204) increases the confidence value of the identified operating conditions.

## Patentansprüche

1. Triebwerksmodell-Kalibrierungssystem (100), umfassend:
ein Gasturbinentriebwerk (102), das so konfiguriert ist, dass es gemäß einem oder mehreren Triebwerksbetriebsparametern arbeitet;
einen Sensor (104), der dazu konfiguriert ist, das Gasturbinentriebwerk (102) zu überwachen und gemessene Parameter (Pₘₐₛ) auszugeben, die den einen oder die mehreren Triebwerksbetriebsparameter angeben;
ein nominales Triebwerksschätzungsmodul (106), das ein nominales Triebwerksmodell mit offenem Kreislauf (200) beinhaltet, das so konfiguriert ist, dass es geschätzte nominale Triebwerksparameter (Pₑₛₜ) ausgibt, die den einen oder die mehreren Triebwerksbetriebsparameter angeben, wobei das nominale Triebwerksschätzungsmodul (106) eine oder mehrere Triebwerksbetriebsbedingungen des Gasturbinentriebwerks (102) basierend auf dem einen oder den mehreren Triebwerksbetriebsparametern identifiziert und das nominale Triebwerksmodell mit offenem Kreislauf (200) basierend auf den einen oder mehreren identifizierten Triebwerksbetriebsbedingungen selektiv aktualisiert; und
ein selbstabgestimmtes Triebwerksschätzungsmodul (108), das ein selbstabgestimmtes Triebwerksmodell mit geschlossenem Kreislauf (202) beinhaltet, das so konfiguriert ist, dass es geschätzte selbstabgestimmte Triebwerksparameter (P*ₑₛₜ) ausgibt, die den einen oder die mehreren Triebwerksbetriebsparameter angeben, wobei das selbstabgestimmte Triebwerksschätzungsmodul (108) das selbstabgestimmte Triebwerksmodell mit geschlossenem Kreislauf (202) basierend auf Kurzzeitabstimmungsparametern (ΔηST) und Langzeitabstimmungsparametern (ΔηLT) aktualisiert, wobei das nominale Triebwerksschätzungsmodul (106) ferner Folgendes umfasst:
ein Betriebsarterkennungsmodul (204), das die Triebwerksbetriebsbedingungen identifiziert; und
ein Kalibrierungsanpassungsmodul (206), das dazu konfiguriert ist, das nominale Triebwerksmodell mit offenem Kreislauf (200) und das selbstabgestimmte Triebwerksmodell mit geschlossenem Kreislauf (202) basierend auf der einen oder den mehreren Triebwerksbetriebsbedingungen, die von dem Betriebsarterkennungsmodul (204) identifiziert wurden, selektiv zu aktualisieren.

2. Triebwerksmodell-Kalibrierungssystem (100) nach Anspruch 1, wobei das selbstabgestimmte Triebwerksschätzungsmodul (108) ferner umfasst:
ein Selbstabstimmungsmodul (300), das dazu konfiguriert ist, angepasste Abstimmungsparameter (Δη) zu bestimmen, die aggregierte Anpassungen des selbstabgestimmten Triebwerkmodells mit geschlossenem Kreislauf (202) basierend auf einer Differenz zwischen den gemessenen Parametern (Pₘₐₛ) und den geschätzten selbstabgestimmten Triebwerksparametern (P*ₑₛₜ) angeben; und
ein Langzeittrendverschlechterungsmodul (302), das dazu konfiguriert ist, die Langzeitabstimmungsparameter (ΔηLT) basierend auf den angepassten Abstimmungsparametern (Δη) zu bestimmen und die Kurzzeitabstimmungsparameter (Δηs_{T}) basierend auf einer Differenz zwischen den angepassten Abstimmungsparametern (Δη) und den Langzeitabstimmungsparametern (ΔηLT) zu bestimmen.

3. Triebwerksmodell-Kalibrierungssystem (100) nach Anspruch 1 oder 2, wobei das selbstabgestimmte Triebwerksschätzungsmodul (108) das selbstabgestimmte Triebwerksmodell mit geschlossenem Kreislauf (202) unter Verwendung der Kurzzeitabstimmungsparameter (Δηs_{T}) unabhängig von den Langzeitabstimmungsparametern (ΔηLT) aktualisiert.

4. Triebwerksmodell-Kalibrierungssystem (100) nach einem der vorhergehenden Ansprüche, wobei das Betriebsarterkennungsmodul (204) ein bestimmtes Kalibrierungsmodell aus einer Vielzahl von unterschiedlichen Kalibrierungsmodellen basierend auf den identifizierten einen oder mehreren Triebwerksbetriebsbedingungen auswählt und das ausgewählte Kalibrierungsmodell an das Kalibrierungsanpassungsmodul (206) übergibt, und das Kalibrierungsanpassungsmodul (206) das nominale Triebwerksmodell mit offenem Kreislauf (200) und das selbstabgestimmte Triebwerksmodell mit geschlossenem Kreislauf (202) basierend auf dem ausgewählten Kalibrierungsmodell aktualisiert.

5. Triebwerksmodell-Kalibrierungssystem (100) nach Anspruch 4, wobei die Vielzahl von unterschiedlichen Kalibrierungsmodellen ein Inbetriebnahmemodell beinhaltet, das basierend auf Testzellendaten erstellt wird, die gemäß einem Abnahmetest generiert wurden, und ein Betriebskalibrierungsmodell, das basierend auf Flugdaten erstellt wird, die während des Betriebs des Gasturbinentriebwerks (102) gesammelt wurden.

6. Triebwerksmodell-Kalibrierungssystem (100) nach Anspruch 4 oder 5, wobei das Betriebsarterkennungsmodul (204) einen Kalibrierungsanpassungsmodus initiiert, um das nominale Triebwerksmodell mit offenem Kreislauf (200) und das selbstabgestimmte Triebwerksmodell mit geschlossenem Kreislauf (202) zu kalibrieren, als Reaktion auf das Bestimmen, dass die eine oder die mehreren identifizierten Triebwerksbetriebsbedingungen zuvor nicht identifiziert wurden.

7. Triebwerksmodell-Kalibrierungssystem (100) nach Anspruch 6, wobei das Betriebsarterkennungsmodul (204) den Betriebsbedingungen des Gasturbinentriebwerks (102) Konfidenzwerte zuweist und bestimmt, wann die einen oder die mehreren identifizierten Triebwerksbetriebsbedingungen zuvor nicht identifiziert wurden, basierend auf den Konfidenzwerten und einem Schwellenwert.

8. Triebwerksmodell-Kalibrierungssystem (100) nach Anspruch 7, wobei das Betriebsarterkennungsmodul (204) als Reaktion auf das Initiieren des Kalibrierungsmodus den Konfidenzwert der identifizierten Betriebsbedingungen erhöht.

9. Verfahren zum Kalibrieren eines Triebwerksmodells, das ein Gasturbinentriebwerk (102) darstellt, das so konfiguriert ist, dass es gemäß einem oder mehreren Triebwerksbetriebsparametern arbeitet, das Verfahren umfassend:
Überwachen, über einen Sensor (104), des Gasturbinentriebwerks (102) und Ausgeben von von dem Sensor (104) gemessenen Parametern (Pₘₐₛ) , die den einen oder die mehreren Triebwerksbetriebsparameter angeben;
Ausgeben, über ein nominales Triebwerksschätzungsmodul (106), das ein nominales Triebwerksmodell mit offenem Kreislauf (200) beinhaltet, geschätzter nominaler Triebwerksparameter (Pₑₛₜ), die den einen oder die mehreren Triebwerksbetriebsparameter angeben;
Identifizieren, über das nominale Triebwerksschätzungsmodul (106), einer oder mehrerer Triebwerksbetriebsbedingungen des Gasturbinentriebwerks (102) basierend auf dem einen oder den mehreren Triebwerksbetriebsparametern;
selektives Aktualisieren des nominales Triebwerksmodells mit offenem Kreislauf (200) basierend auf der einen oder den mehreren identifizierten Triebwerkbetriebsbedingungen;
Ausgeben, über ein selbstabgestimmtes Triebwerksschätzungsmodul (108), das ein selbstabgestimmtes Triebwerksmodell mit geschlossenem Kreislauf (202) beinhaltet, geschätzter selbstabgestimmter Triebwerksparameter (P*est), die den einen oder die mehreren Triebwerksbetriebsparameter angeben;
Aktualisieren des selbstabgestimmten Triebwerksmodells mit geschlossenem Kreislauf (202) basierend auf Kurzzeitabstimmungsparametern (ΔηST) und
Langzeitabstimmungsparametern (Δη_{LT});
Identifizieren, über ein Betriebsarterkennungsmodul (204), der Triebwerksbetriebsbedingungen; und
selektives Aktualisieren des nominalen Triebwerksmodells mit offenem Kreislauf (200) und des selbstabgestimmten Triebwerksmodells mit geschlossenem Kreislauf (202) unter Verwendung eines Kalibrierungsanpassungsmoduls (206) basierend auf der einen oder den mehreren Triebwerksbetriebsbedingungen, die von dem Betriebsarterkennungsmodul (204) identifiziert wurden.

10. Verfahren nach Anspruch 9, ferner umfassend:
Bestimmen, über ein Selbstabstimmungsmodul (300), von angepassten Abstimmungsparametern \(Δη), die aggregierte Anpassungen des selbstabgestimmten Triebwerksmodells mit geschlossenem Kreislauf (202) angeben, basierend auf einer Differenz zwischen den gemessenen Parametern (Pₘₐₛ) und den geschätzten selbstabgestimmten Triebwerksparametern (P*ₑₛₜ);
Bestimmen, über ein Langzeittrendverschlechterungsmodul (302), der Langzeitabstimmungsparameter (ΔηLT) basierend auf den angepassten Abstimmungsparametern (Δη); und
Bestimmen der Kurzzeitabstimmungsparameter (Δηs_{T}) basierend auf einer Differenz zwischen den angepassten Abstimmungsparametern (Δη) und den Langzeitabstimmungsparametern (ΔηLT).

11. Verfahren nach Anspruch 9 oder 10, wobei das selbstabgestimmte Triebwerksschätzungsmodul (108) das selbstabgestimmte Triebwerksmodell mit geschlossenem Kreislauf (202) unter Verwendung der Kurzzeitabstimmungsparameter (Δηs_{T}) unabhängig von den Langzeitabstimmungsparametern (ΔηLT) aktualisiert.

12. Verfahren nach einem der Ansprüche 9 bis 11, ferner umfassend:
Auswählen, über das Betriebsarterkennungsmodul (204), eines bestimmten Kalibrierungsmodells aus einer Vielzahl von unterschiedlichen Kalibrierungsmodellen basierend auf der einen oder den mehreren identifizierten Triebwerksbetriebsbedingungen;
Übergeben des ausgewählten Kalibrierungsmodells an das Kalibrierungsanpassungsmodul (206); und
Aktualisieren, über das Kalibrierungsanpassungsmodul (206), des nominalen Triebwerksmodells mit offenem Kreislauf (200) und des selbstabgestimmten Triebwerksmodells mit geschlossenem Kreislauf (202) basierend auf dem ausgewählten Kalibrierungsmodell.

13. Verfahren nach Anspruch 12, wobei die Vielzahl von unterschiedlichen Kalibrierungsmodellen ein Inbetriebnahmemodell beinhaltet, das basierend auf Testzellendaten erstellt wird, die gemäß einem Abnahmetest generiert wurden, und ein Betriebskalibrierungsmodell, das basierend auf Flugdaten erstellt wird, die während des Betriebs des Gasturbinentriebwerks (102) gesammelt wurden.

14. Verfahren nach Anspruch 12 oder 13, ferner umfassend Initiieren, über das Betriebsarterkennungsmodul (204), eines Kalibrierungsanpassungsmodus, um das nominale Triebwerksmodell mit offenem Kreislauf (200) und das selbstabgestimmte Triebwerksmodell mit geschlossenem Kreislauf (202) zu kalibrieren, als Reaktion auf das Bestimmen, dass die eine oder die mehreren identifizierten Triebwerkbetriebsbedingungen zuvor nicht identifiziert wurden.

15. Verfahren nach Anspruch 14, das Verfahren ferner umfassend:
Zuweisen, über das Betriebsarterkennungsmodul (204), von Konfidenzwerten zu den Betriebsbedingungen des Gasturbinentriebwerks (102); und
Bestimmen, über das Betriebsarterkennungsmodul (204), wenn die eine oder die mehreren identifizierten Triebwerksbetriebsbedingungen nicht zuvor identifiziert wurden, basierend auf den Konfidenzwerten und einem Schwellenwert, wobei optional:
als Reaktion auf das Initiieren des Kalibrierungsmodus das Betriebsarterkennungsmodul (204) den Konfidenzwert der identifizierten Betriebsbedingungen erhöht.

## Revendications

1. Système d'étalonnage de modèle de moteur (100) comprenant :
un moteur à turbine à gaz (102) configuré pour fonctionner selon un ou plusieurs paramètres de fonctionnement du moteur ;
un capteur (104) configuré pour surveiller le moteur à turbine à gaz (102) et délivrer des paramètres mesurés (Pₘₐₛ) indicatifs des un ou plusieurs paramètres de fonctionnement du moteur ;
un module d'estimation de moteur nominal (106) comportant un modèle de moteur nominal en boucle ouverte (200) configuré pour générer des paramètres de moteur nominaux estimés (Pₑₛₜ) indicatifs des un ou plusieurs paramètres de fonctionnement du moteur, dans lequel le module d'estimation de moteur nominal (106) identifie une ou plusieurs conditions de fonctionnement du moteur à turbine à gaz (102) sur la base des un ou plusieurs paramètres de fonctionnement du moteur et met à jour sélectivement le modèle de moteur nominal en boucle ouverte (200) sur la base des une ou plusieurs conditions de fonctionnement du moteur identifiées ; et
un module d'estimation de moteur auto-réglé (108) comportant un modèle de moteur auto-réglé en boucle fermée (202) configuré pour générer des paramètres de moteur auto-réglés estimés (P*ₑₛₜ) indicatifs des un ou plusieurs paramètres de fonctionnement du moteur, dans lequel le module d'estimation de moteur auto-réglé (108) met à jour le modèle de moteur auto-réglé en boucle fermée (202) sur la base des paramètres de réglage à court terme (ΔηST) et des paramètres de réglage à long terme (Δη_{LT}), dans lequel le module d'estimation de moteur nominal (106) comprend également :
un module de reconnaissance de régime (204) qui identifie les conditions de fonctionnement du moteur ; et
un module de réglage d'étalonnage (206) configuré pour mettre à jour sélectivement le modèle de moteur nominal en boucle ouverte (200) et le modèle de moteur auto-réglé en boucle fermée (202) sur la base des une ou plusieurs conditions de fonctionnement du moteur identifiées par le module de reconnaissance de régime (204).

2. Système d'étalonnage de modèle de moteur (100) selon la revendication 1, dans lequel le module d'estimation de moteur auto-réglé (108) comprend également :
un module d'auto-réglage (300) configuré pour déterminer les paramètres de réglage ajustés (Δη) indicatifs des ajustements agrégés du modèle de moteur auto-réglé en boucle fermée (202) sur la base d'une différence entre les paramètres mesurés (Pₘₐₛ) et les paramètres moteur auto-réglés estimés (P*ₑₛₜ) ; et
un module de détérioration de tendance à long terme (302) configuré pour déterminer les paramètres de réglage à long terme (Dη_{LT}) sur la base des paramètres de réglage ajustés (Δη) et pour déterminer les paramètres de réglage à court terme (ΔηST) sur la base d'une différence entre les paramètres de réglage ajustés (Δη) et les paramètres de réglage à long terme (ΔηLT).

3. Système d'étalonnage de modèle de moteur (100) selon la revendication 1 ou 2, dans lequel le module d'estimation de moteur auto-réglé (108) met à jour le modèle de moteur auto-réglé en boucle fermée (202) à l'aide des paramètres de réglage à court terme (Δη_{ST}) indépendamment des paramètres de réglage à long terme (Δη_{LT}) .

4. Système d'étalonnage de modèle de moteur (100) selon une quelconque revendication précédente, dans lequel le module de reconnaissance de régime (204) sélectionne un modèle d'étalonnage donné parmi une pluralité de modèles d'étalonnage différents sur la base des une ou plusieurs conditions de fonctionnement du moteur identifiées, et délivre le modèle d'étalonnage sélectionné au module de réglage d'étalonnage (206), et le module de réglage d'étalonnage (206) met à jour le modèle de moteur nominal en boucle ouverte (200) et le modèle de moteur auto-réglé en boucle fermée (202) sur la base du modèle d'étalonnage sélectionné.

5. Système d'étalonnage de modèle de moteur (100) selon la revendication 4, dans lequel la pluralité de modèles d'étalonnage différents comporte un modèle d'entrée en service qui est construit sur la base de données de cellule de test générées selon un test d'acceptation, et un modèle d'étalonnage de service qui est construit sur la base de données de vol collectées pendant le fonctionnement du moteur à turbine à gaz (102) .

6. Système d'étalonnage de modèle de moteur (100) selon la revendication 4 ou 5, dans lequel le module de reconnaissance de régime (204) initie un mode de réglage d'étalonnage pour étalonner le modèle de moteur nominal en boucle ouverte (200) et le modèle de moteur auto-réglé en boucle fermée (202) en réponse à la détermination que les une ou plusieurs conditions de fonctionnement du moteur identifiées n'ont pas été identifiées précédemment.

7. Système d'étalonnage de modèle de moteur (100) selon la revendication 6, dans lequel le module de reconnaissance de régime (204) attribue des valeurs de confiance aux conditions de fonctionnement du moteur à turbine à gaz (102) et détermine quand les une ou plusieurs conditions de fonctionnement du moteur identifiées n'ont pas été identifiées précédemment sur la base des valeurs de confiance et d'une valeur seuil.

8. Système d'étalonnage de modèle de moteur (100) selon la revendication 7, dans lequel, en réponse à l'initiation du mode d'étalonnage, le module de reconnaissance de régime (204) augmente la valeur de confiance des conditions de fonctionnement identifiées.

9. Procédé d'étalonnage d'un modèle de moteur représentant un moteur à turbine à gaz (102) configuré pour fonctionner selon un ou plusieurs paramètres de fonctionnement du moteur, le procédé comprenant :
la surveillance, par le biais d'un capteur (104), du moteur à turbine à gaz (102) et la délivrance à partir du capteur (104) des paramètres mesurés (Pₘₐₛ) indicatifs des un ou plusieurs paramètres de fonctionnement du moteur ;
la délivrance, par le biais d'un module d'estimation de moteur nominal (106) comportant un modèle de moteur nominal en boucle ouverte (200), des paramètres de moteur nominaux estimés (Pₑₛₜ) indicatifs des un ou plusieurs paramètres de fonctionnement du moteur ;
l'identification, par le biais du module d'estimation du moteur nominal (106), d'une ou de plusieurs conditions de fonctionnement du moteur du moteur à turbine à gaz (102) sur la base des un ou plusieurs paramètres de fonctionnement du moteur ;
la mise à jour sélective du modèle de moteur nominal en boucle ouverte (200) sur la base des une ou plusieurs conditions de fonctionnement du moteur identifiées ;
la délivrance, par le biais d'un module d'estimation de moteur auto-réglé (108) comportant un modèle de moteur auto-réglé en boucle fermée (202), des paramètres de moteur auto-réglés estimés (P*est) indicatifs des un ou plusieurs paramètres de fonctionnement du moteur ;
la mise à jour du modèle de moteur auto-réglé en boucle fermée (202) sur la base de paramètres de réglage à court terme (ΔηST) et de paramètres de réglage à long terme (Δη_{LT}) ;
l'identification, par le biais d'un module de reconnaissance de régime (204), des conditions de fonctionnement du moteur ; et
la mise à jour sélective du modèle de moteur nominal en boucle ouverte (200) et du modèle de moteur auto-réglé en boucle fermée (202) à l'aide d'un module de réglage d'étalonnage (206) sur la base des une ou plusieurs conditions de fonctionnement du moteur identifiées par le module de reconnaissance de régime (204).

10. Procédé selon la revendication 9, comprenant également :
la détermination, par le biais d'un module d'auto-réglage (300), des paramètres de réglage ajustés (Δη) indicatifs des ajustements agrégés du modèle de moteur auto-réglé en boucle fermée (202) sur la base d'une différence entre les paramètres mesurés (Pₘₐₛ) et les paramètres moteur auto-réglés estimés (P*est) ;
la détermination, par le biais d'un module de détérioration de tendance à long terme (302), des paramètres de réglage à long terme (ΔηLT) sur la base des paramètres de réglage ajustés (Δη) ; et
la détermination des paramètres de réglage à court terme (ΔηST) sur la base d'une différence entre les paramètres de réglage ajustés (Δη) et les paramètres de réglage à long terme (ΔηLT).

11. Procédé selon la revendication 9 ou 10, dans lequel le module d'estimation de moteur auto-réglé (108) met à jour le modèle de moteur auto-réglé en boucle fermée (202) à l'aide des paramètres de réglage à court terme (Δη_{ST}) indépendamment des paramètres de réglage à long terme (ΔηLT).

12. Procédé selon l'une quelconque des revendications 9 à 11, comprenant également :
la sélection, par le biais du module de reconnaissance de régime (204), d'un modèle d'étalonnage donné parmi une pluralité de modèles d'étalonnage différents sur la base des une ou plusieurs conditions de fonctionnement du moteur identifiées ;
la délivrance du modèle d'étalonnage sélectionné au module de réglage d'étalonnage (206) ; et
la mise à jour, par le biais du module de réglage d'étalonnage (206), du modèle de moteur nominal en boucle ouverte (200) et du modèle de moteur auto-réglé en boucle fermée (202) sur la base du modèle d'étalonnage sélectionné.

13. Procédé selon la revendication 12, dans lequel la pluralité de modèles d'étalonnage différents comporte un modèle d'entrée en service qui est construit sur la base de données de cellule de test générées selon un test d'acceptation, et un modèle d'étalonnage de service qui est construit sur la base de données de vol collectées pendant le fonctionnement du moteur à turbine à gaz (102).

14. Procédé selon la revendication 12 ou 13, comprenant également l'initiation, par le biais du module de reconnaissance de régime (204), d'un mode d'ajustement d'étalonnage pour étalonner le modèle de moteur nominal en boucle ouverte (200) et le modèle de moteur auto-réglé en boucle fermée (202) en réponse à la détermination que les une ou plusieurs conditions de fonctionnement du moteur identifiées n'ont pas été identifiées précédemment.

15. Procédé selon la revendication 14, dans lequel le procédé comprend également :
l'attribution, par le biais du module de reconnaissance de régime (204), des valeurs de confiance aux conditions de fonctionnement du moteur à turbine à gaz (102) ; et
la détermination, par le biais du module de reconnaissance de régime (204), quand les une ou plusieurs conditions de fonctionnement du moteur identifiées n'ont pas été identifiées précédemment sur la base des valeurs de confiance et d'une valeur seuil, éventuellement dans lequel :
en réponse à l'initiation du mode d'étalonnage, le module de reconnaissance de régime (204) augmente la valeur de confiance des conditions de fonctionnement identifiées.
